# EUROPÄISCHE PATENTSCHRIFT

(11) **EP 1 872 181 B1**
(45) Veröffentlichungstag und Bekanntmachung des Hinweises auf die Patenterteilung: **17.12.2008**
(21) Anmeldenummer: 06722508.6
(22) Anmeldetag: 18.02.2006
(51) Int. Cl.: G05B 19/042, E05F 15/00

(54) **VERFAHREN ZUM DEFINIERTEN SCHLIESSEN EINER FENSTERSCHEIBE EINES KRAFTFAHRZEUGES**
METHOD FOR DEFINED CLOSING OF A WINDOW PANE OF A MOTOR VEHICLE
PROCEDE POUR FERMER DE MANIERE DEFINIE UNE VITRE D'UN VEHICULE AUTOMOBILE

(30) Priorität: 18.04.2005 DE 102005018013
(43) Veröffentlichungstag der Anmeldung: 02.01.2008
(73) Patentinhaber: Conti Temic microelectronic GmbH, 90411 Nürnberg (DE)
(72) Erfinder: EWALD, Rolf, 88697 Bermatingen (DE); BARZIK, Holger, 78224 Singen (DE)
(86) Internationale Anmeldenummer: PCT/DE2006/000303
(87) Internationale Veröffentlichungsnummer: WO 2006/111115

(56) Entgegenhaltungen:
- DE-A1- 10 028 038
- DE-A1- 10 028 041
- DE-A1- 10 258 476
- DE-C1- 19 628 203
- DE-C1- 19 921 092
- US-A- 5 982 124

## Beschreibung

Die Erfindung betrifft ein Verfahren zum Schließen einer Fensterscheibe eines Kraftfahrzeuges mittels eines fremdkraftbetätigten Kraftfahrzeugfensterhebers. Beim Schließen und Öffnen eines Fensterscheibe eines Kraftfahrzeuges mittels eines fremdkraftbetätigten Kraftfahrzeugfensterhebers ist es von besonderer Bedeutung stets die aktuelle Position der Fensterscheibe zu kennen bzw. diese Position möglichst genau zu kennen, um somit einen sichere Basis für die Funktionalität eines Einklemmschutzes zu gewährleisten. Hierzu wird eine Normierung der Scheibenposition vorgenommen. Bei fremdkraftbetätigten Kraftfahrzeugfensterhebers wird der Antrieb automatisch abgeschaltet und gegebenenfalls reversiert, wenn die Fensterscheibe beim Anheben auf ein Hindernis trifft, das zwischen der Scheibenoberkante und dem Rahmen der Fensterscheibe eingeklemmt würde. Hierbei besteht jedoch das Problem, dass das Einfahren der Fensterscheibe in die obere Scheibendichtung auf Grund des von der Scheibendichtung gegen die Verstellbewegung der Fensterscheibe ausgeübten Widerstandes als Einklemmfall interpretiert werden kann. In diesem Fall würde der fremdkraftbetätigten Kraftfahrzeugfensterheber automatisch abschalten und würde die Fensterscheibe nicht vollständig in die obere Scheibendichtung einfahren.

Aus DE 199 21 092 C1 ist ein Verfahren zum Normieren der Scheibenposition eines fremdkraftbetätigten Kraftfahrzeugfensterhebers bekannt, wobei die Fensterscheibe mittels des Antriebs des Fensterhebers in eine mit einem Dichtungsbereich versehene Schließposition gefahren wird und diese Schließposition zur Normierung der Scheibenposition verwendet wird. Zur Prüfung, ob die Fensterscheibe ihre Schließposition erreicht hat, wird die Änderung einer mit der Dynamik der Fensterscheibe korrelierten Größe beim Einlaufen der Fensterscheibe in den der Schließposition zugeordneten Dichtungsbereich ausgewertet. Eine Normierung, d.h. eine Referenzposition am oberen mechanischen Anschlag wird vorgenommen. Um hierbei sicherzustellen, dass tatsächlich der obere mechanische Anschlag erreicht wurde, wird das charakteristische Verhalten der Dichtung mit berücksichtigt. Wenn das charakteristische Verhalten bei Eintritt in den Bereich der Dichtung auftritt, hierbei ist eine typische Scheibengeschwindigkeitsreduktion durch die Hemmwirkung der Dichtungslippe festzustellen und wird anschließend ein mechanischer Block/Hindernis festgestellt, so wird bei dieser Erfindung nur dann eine Normierung vorgenommen.

Aus DE 100 28 038 A1 ist ein Verfahren zur Bestimmung der Position eines durch die Antriebswelle eines Gleichstrommotors angetriebenen Elements innerhalb einer vorbestimmten Bewegungsstrecke zwischen zwei Blockpositionen bekannt. Die Positionsbestimmung erfolgt durch Auswertung der im Ankerstromsignal enthaltenen Stromrippel. Hierbei wird bei einer Bewegung des angetriebenen Elements in eine definierte Blockposition eine systemseitige Normierung vorgenommen. Beim Einfahren des angetriebenen Elements in eine Blockposition wird der Gleichstrommotor vor Erreichen der systemseitig definierten Blockposition stromlos geschaltet und nach einer vorbestimmten Zeitspanne zum letztendlichen Einfahren des angetriebenen Elements in die Blockposition erneut aktiviert. Nachdem das angetriebene Element in seine mechanisch definierte Blockposition gebracht worden ist, wird eine systemseitige Normierung dieser Blockposition vorgenommen. Diese Normierung am oberen mechanischen Anschlag des angetriebenen Elements soll der Möglichkeit entgegen wirken, welche besteht, wenn ein Schließsystem mit unterschiedlicher kinetischer Energie, d.h. mit unterschiedlicher Geschwindigkeit, gegen einen mechanischen Anschlag fährt. Durch diese unterschiedliche kinetische Energie kann sich der Referenzpunkt verschieben, insbesondere bei einem weichen, etwas nachgiebigen mechanischen Anschlag. Somit entstehen Ungenauigkeiten bei der Referenzposition. Dies soll damit vermieden werden, in dem man den Motorlauf kurz vor erreichen der mechanischen Blockposition stoppt, wobei die Positionsbestimmung mittels Stromrippelzählung erfolgt, und anschließend wieder einschaltet. Auf diese Weise sollen die Varianzen in der kinetischen Energie so weit reduziert werden, dass eine vertrauenswürdige Referenzposition zu erwarten ist.

Aus DE 102 58 476 A1 ist ein Verfahren zur positionsabhängigen Steuerung eines mittels einer elektrisch angetriebenen Verstelleinrichtung in einer Antriebsbewegung bewegbaren Verstellelementes in einem Kraftfahrzeug bekannt. Die Verstelleinrichtung wertet hierbei eine Mehrzahl unterschiedlicher Betriebsmodi und Charakteristika eines Antriebssignals der Verstelleinrichtung aus, insbesondere die Welligkeit eines Antriebsstromes, zur Bestimmung der Position des Elementes. Es ist vorgesehen, dass eine die Antriebsbewegung der Verstelleinrichtung beeinflussende Kenngröße und/oder ein die Verstelleinrichtung charakterisierender Kennwert zur Ermittlung eines Fehlerwertes der bestimmten Position des Verstellelementes ausgewertet wird und die Betriebsmodi der Verstelleinrichtung in Abhängigkeit des ermittelten Fehlerwertes gesteuert werden. Die Positionserfassung erfolgt mittels Stromrippelzählung. Diese Art der Positionsbestimmung ist sehr anfällig bei gewissen Gegebenheiten. So kommt es bei Motorstarts, bei hohen Lasten, bei Bordnetzspannungsschwankungen, bei Temperaturschwankungen, Alterung des Systems u.s.w. zu Positionsverlusten und somit speziell bei Einklemmschutzsystemen zu Problemen mit der Einklemmschutzabschaltposition. Bei dem Gegenstand dieser Erfindung werden daher gewissen Gegebenheiten wie z.B. Bordnetzspannungsschwankungen erfasst und dementsprechend die Funktion des bewegbaren Verstellelementes gesteuert.

Aus DE 196 28 203 C2 ist ein Verfahren zur Begrenzung der Überschußkraft eines elektrisch gesteuerten, fremdkraftbetätigten Aggregats, das insbesondere vorteilhaft im Zusammenhang mit Fensterhebern eingesetzt werden kann, die mit einer Einklemmschutzerkennung ausgerüstet sind, bekannt. Das Verfahren zeichnet sich dadurch aus, dass dem Schließbereich wenigstens eine Korrelationsgröße als Abschaltkriterium zugeordnet wird, welche die im Schließbereich zur Verfügung stehende Verstellkraft um einen durch die Elektronikeinheit vorgegebenen Betrag im Vergleich zu einem davor liegenden Einlaufbereich des Schließbereichs gemessenen Wert erhöht. Der Erhöhungsbetrag wird als ein relativer Wert auf der Basis des zuvor gemessenen Wertes der Korrelationsgröße errechnet. Hierbei sollen die Schließkräfte, die zum sauberen Dichtschließen der Scheibe in der oberen Dichtung notwendig sind, begrenzt werden. Normalerweise fährt die Scheibe mit maximaler Motorkraft in die obere Dichtung bis zur mechanische Blockposition. Das bedeutet aber zugleich, dass die Kräfte, welche auf das ganze mechanische System wirken, sehr hoch sind. Um diese Kräfte zu reduzieren, wird das charakteristische Verhalten der Dichtung ausgewertet.

Außerdem wird nach auf die DE 100 28 041 A1 verwiesen.

Nachteilig bei all diesen bekannten Verfahren ist aber der Umstand, dass eine Normierung nur dann vorgenommen werden kann, wenn die Fensterscheibe mittels des fremdkraftbetätigten Kraftfahrzeugfensterhebers in eine Endposition verbracht ist, welche detektiert wird. Diese Endposition wird zumeist automatisch erreicht, wenn der Nutzer die Fensterscheibe im Automatik-Modus schließt. Die fremdkraftbetätigten Kraftfahrzeugfensterheber haben aber auch einen so genannten "manuellen Modus", in welchem der Nutzer die Fahrzeugfensterscheibe in jede gewünschte Position verschieben kann. Da aber bei einem Wechsel zwischen verschiedenen derartigen Positionen die Steuereinheit des fremdkraftbetätigten Kraftfahrzeugfensterhebers die exakte Position der Fensterscheibe nicht mehr bestimmen kann, muss eine zwangsläufige Normierung vorgenommen werden. Es hat sich insbesondere im Rahmen der Benutzung von derartigen Systemen gezeigt, dass verschiedene Nutzer die Fensterscheibe mit dem fremdkraftbetätigten Kraftfahrzeugfensterheber weder komplett öffnen noch komplett schließen, sondern häufig, noch ehe eine der Endpositionen erreicht ist, die Fensterscheibe unbewußt oder auch bewusst stoppen, oder auch nicht komplett schließen, sodass die Steuereinheit des fremdkraftbetätigten Kraftfahrzeugfensterhebers nach einiger zeit die tatsächliche Position der Fensterscheibe verliert.
Da es aber, wie beschrieben, für eine korrekte Positionserfassung bei fremdkraftbetätigten Kraftfahrzeugfensterhebern mit Einklemmschutzfunktionalität notwendig ist, die Position der Fensterscheibe nach einer gewissen Anzahl von Fensterläufen zu überprüfen und gegebenenfalls zu korrigieren (Nachnormierung genannt) und da es, wie beschrieben, in der Praxis öfters vorkommt, dass der Nutzer beim Schließen der Scheibe den manuellen Hochlaufschalter (Motoraktivierung solange Schalter gedrückt) nicht lange genug aktiviert, um in das Stadium der Nachnormierung zu gelangen, ist die Folge Ungenauigkeiten in der Positionszählung, welche zu Fehlreversieren an der Dichtung oder zum Einklemmen von 4 mm Klemmkörpern, welche per Gesetz erkannt werden müssen, führen können.

Aufgabe der Erfindung ist es, diese Problematik zu unterbinden und zu gewährleisten, dass auch bei einem manuellen Hochlaufen des Fensters eine Normierung erfolgt.

Diese Aufgabe ist durch die kennzeichnenden Merkmale des Patentanspruchs 1 gelöst. Vorteilhafte Ausgestaltungen der Erfindung ergeben sich anhand der weiteren Beschreibung, der Figuren und der Unteransprüche.

Erfindungsgemäß wird bei einem fremdkraftbetätigten Kraftfahrzeugfensterheber beim Schließen des Fensters dessen Position mittels eines Hallsensors überwacht. Erreicht die Fensterscheibe oder das Schiebedach, welche über das Hebersystem bewegt wird die Nähe einer Blockposition, bei Fensterhebern z.B. den Bereich der oberen Fensterdichtung, so wird dies von der Steuereinheit über die vom Hallsensor erfassten und von diesem gelieferten Signale erkannt. Bewegt sich die Fensterscheibe in die obere Dichtung des Rahmens der Fensterscheibe und erfasst der Hallsensor keine weiteren Positionsänderungen, d.h. keine weiteren Hall-Impulse für eine vorgegebene Zeitdauer z.B. von 300ms, dann wird die Fensterscheibenposition überprüft und falls nötig korrigiert, d.h. nachnormiert. Diese so genannt Blockierzeit kann frei gewählt werden und liegt typischerweise zwischen 100 ms und 500 ms.

Das Hebersystem besteht aus einem Elektromotor und einer Steuereinheit. Der Elektromotor wird zumeist über zwei Schalter mit einer Betriebsspannung und einem Bezugspotential (Masse) über einen Widerstand verbunden, wobei immer ein Schalter in Richtung der Betriebsspannung und der andere Schalter in Richtung Bezugspotential (Masse) geschaltet ist. Zum Abschalten des Elektromotors werden beide Schalter auf Bezugspotential (Masse) gelegt, so dass über dem Elektromotor die Motorspannung Null ist. Der Elektromotor weist ein Polrad und einen zugehörigen Hallsensor auf, welcher ein digitales Signal an die Steuereinheit liefert.

Bewegt der Benutzer im manuellen Hochlauf die Fensterscheibe mit dem fremdkraftbetätigten Kraftfahrzeugfensterheber in Richtung der oberer Fensterdichtung, so wird die aktuelle Position der Fensterscheibe kontinuierlich vom Hallsensor überwacht. Die Position der Fensterscheibe wird von der Steuereinheit anhand der vom Hallsensor ermittelten Werte ermittelt und bei Erreichen der Dichtungsposition, d.h. der Position der Fensterscheibe, bei der der Einklemmschutz deaktiviert werden kann, da keine Einklemmung mehr erfolgen kann, wird vom manuellen Hochlauf der Fensterscheibe über den fremdkraftbetätigten Kraftfahrzeugfensterheber in den automatischen Hochlauf gewechselt, um mit maximaler Motorkraft die Fensterscheibe in die Dichtung zu fahren. Im automatischen Hochlauf wird dann der Motorlauf so lange beibehalten, bis die Blockierzeit erreicht ist und somit eine Positionsüberprüfung und Positionskorrektur ausgeführt wird.

Wird beim erfindungsgemäßen Verfahren beim manuellen Hochlauf die Einklemmschutz Abschaltposition überfahren, was beispielsweise beim Erreichen des Dichtungsbereich gegeben ist, bzw. wenn der Abstand der Fensterscheibe zur Dichtung kleiner als 4 mm ist, so wechselt die Steuereinheit in den automatischen Hochlaufmodus, um sicherzustellen dass eine Positionsüberprüfung und Positionskorrektur ausgeführt wird. In der Regel erfolgt eine Positionsüberprüfung und Positionskorrektur nach typischerweise 100ms bis 500ms Motorblockierzeit an der Position der oberen mechanischen Blockposition.

Die Erfindung wird im Folgenden anhand eines konkreten Ausführungsbeispiels anhand von Figuren erläutert.

Es zeigt:
- Fig. 1: eine schematische Schaltungsanordnung zur Steuerung eines Fensterhebers in einem Kraftfahrzeug und
- Fig. 2: eine schematische Funktionsweise der Erfindung anhand einer Autofensterscheibe in einer Autotüre.

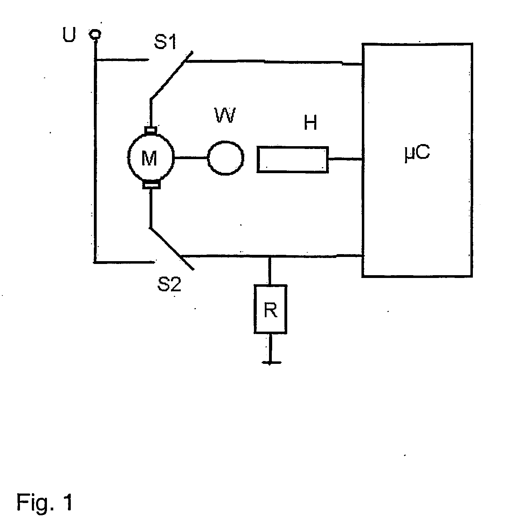

In Fig. 1 ist eine schematische Schaltungsanordnung zur Steuerung eines Fensterhebers in einem Kraftfahrzeug dargestellt, wobei nur die für die Verständlichkeit der Erfindung notwendigen Elemente dargestellt sind. Ein fremdkraftbetätigten Kraftfahrzeugfensterhebersystem besteht aus einem Elektromotor M, und einer zugehörigen Motorsteuereinheit µC. Der Elektromotor M ist über zwei Schalter S1, S2 mit der Betriebsspannung U einerseits und der Masse, über einen Widerstand R, andererseits verbunden. Zum Ausschalten des Elektromotors werden beide Schalter S1 und S2 auf Masse gelegt. Der Elektromotor M weist ein Polrad W auf und einen zugehörigen Hallsensor HS. Der Ausgang des Hallsensors HS ist direkt mit der Motorsteuereinheit µP verbunden. Anhand der Signale der Hallsensors HS ermittelt die Motorsteuereinheit µP die Position der Fensterscheibe.

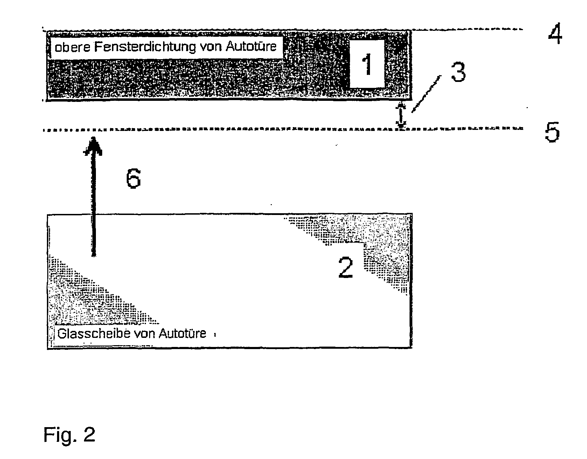

In Fig. 2 ist die schematische Funktionsweise der Erfindung anhand einer Autofensterscheibe in einer Autotüre dargestellt.
Es gibt für einen Nutzer zwei Modi zur Betätigung des Fensterhebers. Es gibt den Automatikmodus, in welchem die Fensterscheibe 2 komplett geöffnet oder geschlossen wird und die Motorsteuereinheit µP die Fensterscheibe 2 unter Berücksichtigung des Einklemmschutzes automatisch komplett schließt oder öffnet. Beim Schließen im Automatikmodus wird die Fensterscheibe 2 bei Überschreitung der Einklemmschutz Abschaltposition 3 und bei Erreichen der oberen Blockposition 4 für eine vorgegebene Zeitdauer mit maximaler Motorkraft in die obere Blockposition 4 gefahren. Hierbei wird dann eine Normierung des Systems des fremdkraftbetätigten Kraftfahrzeugfensterhebers vorgenommen.
Bewegt der Benutzer im manuellen Modus die Fensterscheibe 2 mit dem fremdkraftbetätigten Kraftfahrzeugfensterheber in Richtung der oberer Fensterdichtung 1, so wird die aktuelle Position der Fensterscheibe 2 kontinuierlich von der Motorsteuereinheit µP anhand der vom Hallsensor HS gelieferten Werte überwacht. Die Position der Fensterscheibe 2 wird von der Motorsteuereinheit µP anhand der vom Hallsensor HS ermittelten Werte ermittelt und bei Erreichen der Dichtungsposition, d.h. der Position der Fensterscheibe 2, bei der der Einklemmschutz deaktiviert werden kann, da keine Einklemmung mehr erfolgen kann, wird vom manuellen Hochlauf der Fensterscheibe 2 über den fremdkraftbetätigten Kraftfahrzeugfensterheber in den automatischen Hochlauf gewechselt, um mit maximaler Motorkraft die Fensterscheibe 2 in die Dichtung 1 zu fahren. Im automatischen Hochlauf wird dann der Motorlauf so lange beibehalten, bis die Blockierzeit erreicht ist und somit eine Positionsüberprüfung und Positionskorrektur ausgeführt wird. Wird beim vom Benutzer initiierten manuellen Hochlauf die Einklemmschutz Abschaltposition 5 überfahren, was beispielsweise beim Erreichen des Dichtungsbereich gegeben ist, bzw. wenn der Abstand der Scheibe zur Dichtung kleiner als 4 mm (Bezugszeichen 3 in Fig. 2) ist, so wechselt die Motorsteuereinheit µP in den automatischen Hochlaufmodus, um sicherzustellen dass eine Positionsüberprüfung und Positionskorrektur ausgeführt wird.
In einer vorteilhaften Ausgestaltung der Erfindung ist ein Zähler angeordnet, der die Anzahl der Betätigungen des fremdkraftbetätigten Kraftfahrzeugfensterhebers zählt. In Abhängigkeit des Wertes dieses Zählers führt dann die Motorsteuereinheit µP einen automatischen Hochlauf durch, um sicherzustellen dass eine Positionsüberprüfung und Positionskorrektur ausgeführt wird. Typischerweise erfolgt dies bei einer Anzahl von Betätigungen von mehr als vierzig. Nach jedem automatischen Hochlauf und Positionsüberprüfung und Positionskorrektur wird der Zähler auf null gesetzt.

## Patentansprüche

1. Verfahren zum Schließen einer Fensterscheibe (2) eines Kraftfahrzeuges mit einem fremdkraftbetätigten Kraftfahrzeugfensterheber, welcher mit einem elektronischen Einklemmschutz ausgestattet ist, wobei der fremdkraftbetätigte Kraftfahrzeugfensterheber einen automatischen Modus und einen manuellen Modus zum Öffnen und Schließen der Fensterscheibe (2) aufweist, wobei in der Endstellung der Fensterscheibe (2) eine Normierung zur Positionsbestimmung vorgenommen wird,
**dadurch gekennzeichnet, dass**
beim Schließen der Fensterscheibe (2) im manuellen Modus bei Unterschreitung eines Mindestabstandes zwischen der Fensterscheibe (2) und Scheibendichtung (1) vom manuellen Modus in den Automatikmodus geschaltet wird und die Fensterscheibe (2) in die Scheibendichtung (1) eingefahren wird und der Motorlauf auch bei Erreichen der Endposition (4) beibehalten bleibt, bis eine definierte Blockierzeit erreicht wird.

2. Verfahren nach Anspruch 1
**dadurch gekennzeichnet, dass**
eine definierte Blockierzeit von mindestens 200ms erreicht wird.

3. Verfahren nach Anspruch 1 oder 2,
**dadurch gekennzeichnet, dass**
nach Ablauf der definierten Blockierzeit eine Normierung vorgenommen wird.

4. Verfahren nach Anspruch 3,
**dadurch gekennzeichnet, dass**
die Normierung in Form einer Nachnormierung vorgenommen wird.

5. Verfahren nach einem oder mehrerer der vorangehenden Ansprüche,
**dadurch gekennzeichnet, dass**
von Motorsteuereinheit (µP) anhand der Werte eines Hallsensors (HS) die Position der Fensterscheibe (2) ermittelt wird.

6. Verfahren nach einem oder mehrerer der vorangehenden Ansprüche,
**dadurch gekennzeichnet, dass**
der Motorsteuereinheit (µP) anhand eines Zählers die Anzahl der Betätigungen des fremdkraftbetätigten Kraftfahrzeugfensterhebers mitgeteilt wird und von der Motorsteureinheit (µP) bei Erreichen eines vordefinierten Wertes des Zählers einen automatischen Hochlauf initiiert wird.

7. Verfahren nach einem oder mehrerer der vorangehenden Ansprüche,
**dadurch gekennzeichnet, dass**
ein automatischer Hochlauf nach mehr als vierzig Betätigungen des fremdkraftbetätigten Kraftfahrzeugfensterhebers vorgenommen wird.

8. Verfahren nach einem oder mehrerer der vorangehenden Ansprüche,
**dadurch gekennzeichnet, dass**
nach jedem automatischen Hochlauf und nach jeder Positionsüberprüfung und jeder Positionskorrektur der Stand des Zähler auf null gesetzt wird.

## Claims

1. A method for closing a window panel (2) of a motor vehicle with a motor vehicle window winder operated by an external force, which is equipped with an electronic jamming protection device, wherein the motor vehicle window winder operated by an external force comprises an automatic mode and a manual mode for opening and closing the window panel (2), wherein in the end position of the window panel (2), a standardisation procedure is conducted in order to determine the position,
**characterized in that**
when closing the window panel (2) in manual mode, when a minimum distance between the window panel (2) and the panel seal (1) is not reached, a switch is made from manual mode to automatic mode, and the window panel (2) is moved into the panel seal (1) and the motor continues to run even when the end position (4) is reached until a defined blocking time is reached.

2. A method according to claim 1
**characterized in that**
a defined blocking time of at least 200ms is reached.

3. A method according to either of claims 1 or 2,
**characterized in that**
after the defined blocking time has passed, a standardisation procedure is conducted.

4. A method according to claim 3,
**characterized in that**
the standardisation procedure is conducted in the form of a post-standardisation.

5. A method according to one or more of the preceding claims,
**characterized in that**
the position of the window panel (2) is determined by the motor control unit (µp) based on the values of a Hall sensor (HS).

6. A method according to one or more of the preceding claims,
**characterized in that**
the motor control unit (µp), via a counter, is informed regarding the number of times in which the motor vehicle window winder operated by an external force is activated, and when a predefined value of the counter is reached, an automatic run-up is initiated by the motor control unit (µp).

7. A method according to any one or more of the preceding claims,
**characterized in that**
an automatic run-up is conducted after more than forty activations of the motor vehicle window winder operated by an external force.

8. A method according to any one or more of the preceding claims,
**characterized in that**
after every automatic run-up and every position check and every position correction, the counter is set to zero.

## Revendications

1. Procédé de fermeture d'une vitre de fenêtre (2) d'un véhicule automobile ayant un lève-vitre de véhicule automobile activé par une force extérieure qui est équipé d'une protection électronique contre le coincement, le lève-vitre de véhicule automobile activé par une force extérieure présentant un mode automatique et un mode manuel d'ouverture et de fermeture de la vitre de fenêtre (2), une normalisation pour la détermination de position étant entreprise dans la position extrême de la vitre de fenêtre (2),
**caractérisé en ce que,**
lors de la fermeture de la vitre de fenêtre (2) dans le mode manuel, lors du passage sous un intervalle minimal entre la vitre de fenêtre (2) et le joint de fenêtre (1), il se produit une commutation depuis le mode manuel ver le mode automatique, et la vitre de fenêtre (2) est rentrée dans le joint de fenêtre (1), et la marche du moteur est maintenue même lorsque la position extrême (4) est atteinte, jusqu'à ce qu'un temps de blocage défini soit atteint.

2. Procédé selon la revendication 1,
**caractérisé en ce que,**
un temps de blocage défini d'au moins 200 ms est atteint.

3. Procédé selon la revendication 1 ou 2,
**caractérisé en ce que,**
après l'expiration d'un temps de blocage défini, une normalisation est entreprise.

4. Procédé selon la revendication 3,
**caractérisé en ce que,**
la normalisation est entreprise sous la forme d'une post-normalisation.

5. Procédé selon une ou plusieurs des revendications précédentes,
**caractérisé en ce que,**
la position de la vitre de fenêtre (2) est déterminée par l'unité de commande de moteur (µP) à l'aide des valeurs d'un capteur à effet Hall (HS).

6. Procédé selon une ou plusieurs des revendications précédentes,
**caractérisé en ce que,**
à l'aide d'un compteur, le nombre d'actionnements du lève-vitre de véhicule automobile activé par une force extérieure est communiqué à l'unité de commande de moteur (µP) et une montée en régime automatique est amorcée par l'unité de commande de moteur (µP) lorsqu'une valeur prédéfinie du compteur est atteinte.

7. Procédé selon une ou plusieurs des revendications précédentes,
**caractérisé en ce que**
une montée en régime automatique est entreprise après plus de quarante actionnements du lève-vitre de véhicule automobile activé par une force extérieure.

8. Procédé selon une ou plusieurs des revendications précédentes,
**caractérisé en ce que,**
après chaque montée en régime automatique et après chaque vérification de position et chaque correction de position, l'état du compteur est mis à zéro.
